(19) 
Europäisches Patentamt
European Patent Office
Office européen des brevets

(11) **EP 1 746 759 A1**

(12) **EUROPEAN PATENT APPLICATION**
published in accordance with Art. 158(3) EPC

(43) Date of publication:
**24.01.2007 Bulletin 2007/04**

(51) Int Cl.:
*H04L 7/02* [(2006.01)]    *H04J 11/00* [(2006.01)]

(21) Application number: **04805096.7**

(22) Date of filing: **13.12.2004**

(86) International application number:
**PCT/ES2004/000553**

(87) International publication number:
**WO 2005/062520 (07.07.2005 Gazette 2005/27)**

(84) Designated Contracting States:
**AT BE BG CH CY CZ DE DK EE ES FI FR GB GR HU IE IS IT LI LT LU MC NL PL PT RO SE SI SK TR**

(30) Priority: **17.12.2003 ES 200302981**

(71) Applicant: **Diaz Fuente, Vicente
28805 Alcala de Henares (Madrid) (ES)**

(72) Inventors:
• **DIAZ FUENTE, Vicente
E-28805 Alcala de Henares (Madrid) (ES)**

• **HERNANZ CHILOECHES, Daniel
28805 Alcala de Henares (Madrid) (ES)**
• **BERIAN MUGICA, Jesus
28805 Alcala de Henares (Madrid) (ES)**
• **LILLO RODRIGUEZ, Diego
28805 Alcala de Henares (Madrid) (ES)**

(74) Representative: **Lahidalga de Careaga, Jose Luis
C/Arturo Soria 243 - Dupl.
28033 Madrid (ES)**

(54) **DEVICE AND METHOD FOR THE SYNCHRONISATION OF A DATA COMMUNICATION SYSTEM USING COMPLEMENTARY SEQUENCES**

(57)    The invention relates to a device and method for the synchronisation of a data communication system using pairs of complementary sequences. According to the invention, both sequences of the pair are transmitted (1) by means of quadrature modulation (2) and, in a first step, the receiver extracts both quadrature phases (3).

Subsequently, at the output of the filter that is adapted to the complementary sequences (4), a signal peak is obtained which is significantly greater when he form and phase of the reception signal match those of the reference. Moreover, at said output, a threshold detector is used to obtain a timestamp which is used during the remaining steps of the detector in order to be synchronised with the transmitter. The inventive method is advantageous in that it improves the signal-to-noise ratio of the receiver as a function of the length of the sequences expressed as follows: SNR'=M2L,SNR, wherein SNR' is the signal-to noise ratio at the output of the adapted filter, SNR is the signal-to-noise ratio at reception, L is the length of the complementary sequences and M is the number of sequence pairs.

FIGURE 1

**Description**

**Object of the Invention**

The present invention relates to a device and a method which allows synchronising a communication receiver to a transmitter by means of a received signal, in particular communication systems using OTDM (Orthogonal Time Division Multiplexing) modulation techniques and their variants using complementary sequences for encoding the information.

**Background of the Invention**

The use of a synchronisation method for correct data reception is essential in a digital communication system.
Depending on the complexity of the communication system, the latter may include the phase synchronisation of the carrier, the symbol synchronisation and even the frame synchronisation.
Most phase synchronisation methods use a reference or pilot such that the receiver obtains the phase directly by measuring the phase of the pilot signal.
However, there are methods that do not need any reference signal. The Costas feedback or Costas-Loop method is normally used for this type of synchronisation. In spite of the enormous advantages of that method, the signal-to-noise ratio must be of the same order as that of the data in order for the system to work within secure limits, and it degrades quickly with the reduction of this ratio. For symbol and frame synchronization, training sequences are used that are known by the receiver and are inserted by the transmitter at the start of the transmission of each information packet.
This invention is applied to any communication system and especially to any system using OTDM as a modulation technique and its quadrature derivations and multiple complementary sequences.
Naturally, the fundamental advantage of the described technique is the possibility of obtaining a highly reliable timestamp and that said reliability can be controlled by means of the length of the used sequences, due to the properties that these sequences have with respect to another type of sequences used to date.
The use of a synchronisation method for correct data reception is essential in a digital communication system.
The efficiency of a synchronisation system is basically determined by the bandwidth used and the signal-to-noise ratio in the receiver.
Most phase synchronisation methods use a reference or pilot such that the receiver obtains the phase directly by measuring the phase of the pilot signal.
However, there are methods that do not need any reference signal; the Costas feedback or Costas-Loop method is normally used in this type of synchronisation, as explained in "Means for Obtaining Character Time in a Radio Communication System Receiver", US Patent 3,047,660 to John P. Costas, General Electric, 1962.
The drawback of this method is that the signal-to-noise ratio must be high enough for the system to work within secure limits, and it degrades quickly with the reduction of this ratio.
For frame synchronisation, training sequences are used that are known by the receiver and that are inserted by the transmitter at the start of the transmission of each information packet.
There are techniques that use high autocorrelation binary sequences in order to be detected in high noise conditions. See, for example, "Synchronization of a Data Communication Receiver with a Received Data", US Patent No. 4,290,139.
In fact, the system described in this patent is conceptually similar to the one described herein, given that it also uses a filter and a threshold detector to define the synchronisation interval. However, the object of the present invention sets the coefficients of said filter to the use of complementary sequences, these sequences are optimal in the sense that when they are detected, their autocorrelation corresponds to a Krönecker delta, i.e.:

$$\phi_{II}[n] + \phi_{QU}[n] = \begin{cases} 2L & , n = 0 \\ 0 & , n \neq 0 \end{cases} \qquad (1)$$

In other words, if the received signal is aligned in time with the transmitted signal, the sum of the autocorrelations is two times the length of the sequences and zero in any other case. Said property facilitates the detection of the time frame versus any other sequence used to date.
The use of other Barker, Willard, Gold, Kasami, Walsh sequences and many others have been generalized for this reason in most current applications. In this way, the length of the used sequences L allows increasing the noise-to-signal ratio or reducing the signal level in order to detect the received signal correctly. This improvement factor is called process gain PG and can be expressed by:

$$PG = 10\log_{10}(L)\,\mathrm{dB} \qquad (2)$$

One of the most important advantages of the described patent is its use in communication systems using complementary sequences for transmission, as is the case of GCM/OTDM (Golay Coding Modulation/Orthogonal Time Division Multiplexing) as the one described in Spanish patent P200002086 of August 16, 2000. In this case, part of the transmission and reception circuitry can be used to detect synchronisation reducing costs and design resources. The disadvantage of this technique is that, given that each symbol is encoded by a sequence of length L, the bits of which are transmitted at L times the speed of the symbol, the time for acquiring synchronism increases as the length of the used sequences increases.

In the event that the noise is not Gaussian, adapted filtration is not the best solution. The techniques for reducing different types of noise will depend on the application and the features of the communication system.

Due to all that has been commented above, the need for a technique that allows reducing noise in order to improve the detection of the time frame without increasing the bandwidth used, allowing at the same time to maintain the transmitted power, is deduced.

The existence of any patent or utility model the features of which are the object of the present invention is not known.

Description of the Invention

The invention which is set forth uses sets of M complementary sequences. By complementary it is understood that the sum of their autocorrelations results in a Krönecker delta.

The value of M also coincides with the number of sets of complementary sequences that are orthogonal to each other.

By orthogonal it is understood that the sum of the crossed autocorrelations of the complementary sequences of each set is zero. In the particular case of pairs (M=2) of orthogonal sequences, these are denominated Golay sequences in honour of their discoverer. (These concepts are discussed in the article published by Tseng, C.-C. and Liu C.L.: "Complementary Sets of Sequences", in IEEE Trans. Inform. Theory; vol. IT-18, No. 5, pp. 644-652, Sep. 1972.). The explanation is focused on Golay sequences because this is the simplest case, although the patent extends to all values of M.

The main property of the sequences used in this invention is that they have an ideal autocorrelation characteristic, i.e. it corresponds to a perfect Krönecker delta such that they fulfill:

$$\phi_{11}[n] + \phi_{22}[n] + \ldots + \phi_{MM}[n] = \sum_{i=1}^{M} \phi_{ii}[n] = \begin{cases} MN & , n = 0 \\ 0 & , n \neq 0 \end{cases} \qquad (3)$$

where $\phi_{ii}$ are the individual autocorrelations of each of the chosen M complementary sequences of length N. Particularizing for the case of pairs of Golay complementary sequences:

$$\phi_{II}[n] + \phi_{QQ}[n] = \begin{cases} 2N & , n = 0 \\ 0 & , n \neq 0 \end{cases} \qquad (4)$$

The generation of such sequences is carried out from the so called basic kernels known to date of 2, 10 and 26 bits (the rules for the generation of Golay sequences are discussed in the article entitled "Complementary sequences" by M. J. E. Golay, published in IRE Transactions on Information Theory, vol. IT-7, pp. 82-87, April 1961).

When the synchronisation system object of the invention is inserted in a conventional communication equipment, it allows improving the detection of synchronism by improving the signal-to-noise ratio (SNR) as a function of the length of the complementary sequences used. In this way, it allows controlling the quality of the synchronisation system by controlling the length of said sequences.

It consists of two basic blocks: a transmitter block and a receiver block.

The transmitter block is in charge of carrying out the following tasks:

- Generating an impulse of duration one symbol in base band isolated from the data symbols, at least L symbols, where L is the duration of the sequences.
- Convoluting said impulse with a set of orthogonal complementary sequences.
- Sending the composite signal so that it is emitted to the transmission medium by means of quadrature modulation (QAM), by means of two quadrature symbols (e.g. sine and cosine) and for example, an RF and antenna step.

The receiver block is in charge of carrying out the following tasks:

- Sampling the input signals to the receiver either in base band (BB) or in intermediate frequency (IF).
- Correlating the signal by the two quadrature symbols used in the transmission, for example sine and cosine, to the central frequency used in the transmitter, thus extracting the two quadrature phases.
- Correlating each of the output signals of the previous blocks with the pair of complementary sequences corresponding to each of the phases to be recovered.
- Carrying out the sum of the signals obtained in the previous block.
- Using a detection circuit with a defined or adaptative threshold in order to recover the detection instant.

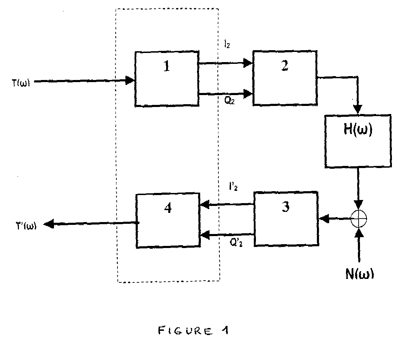

In order to explain the theoretical base of the invention, it is convenient to use a block diagram of the process (figure 1).

In order to simplify, a modulation system having two phases I and Q in base band will be assumed and a pair of Golay complementary sequences (A/B) of length L is used.

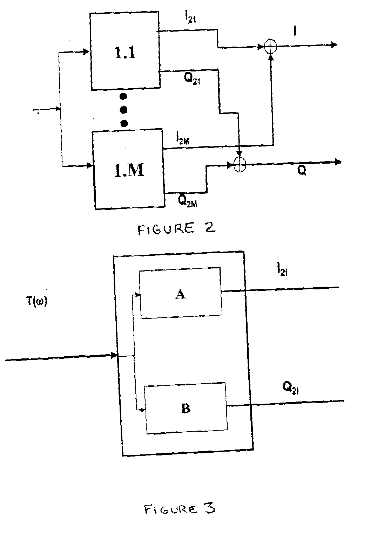

As has been commented, the transmission process starts with the blocks 2.1 and 2.2 (see figure 2) in which the following operation is carried out:

$$I[n] = \sum_{k=-\infty}^{\infty} A[k]\delta[n - kMm] = A\left[\frac{n}{Mm}\right]; \quad Q[n] = \sum_{k=-\infty}^{\infty} B[k]\delta[n - kMm] = B\left[\frac{n}{Mm}\right]$$

$$I(\omega) = A(\omega Mm); \quad Q(\omega) = B(\omega Mm)$$

$$(5)$$

By applying the Fourier transform properties, the obtained signals I(n) and Q(n) are modulated by convoluting with two orthogonal symbols respectively, thus generating a QAM modulation and are transmitted:

$$s_I[n] = \begin{cases} \frac{1}{\sqrt{2}}\cos(\omega_c n), & 0 \le n < Mm - 1 \\ 0, otherwise \end{cases}; s_Q[n] = \begin{cases} \frac{1}{\sqrt{2}}\sin(\omega_c n), & 0 \le n < Mm - 1 \\ 0, otherwise \end{cases}$$

$$Tx[n] = s_I[n] * A\left[\frac{n}{Mm}\right] + s_Q[n] * B\left[\frac{n}{Mm}\right]$$

$$(6)$$

where M is the number of samples per sinusoidal cycle, m is the number of sinusoidal cycles per symbol and $\omega_0$ is the central frequency of transmission in radians/second.

The result, by applying Fourier transforms, corresponds to a 4QAM modulation which by operating:

$$Tx(\omega) = \frac{1}{\sqrt{2}} \left[ \frac{\sin((\omega - \omega_0)Mm/2)}{\sin(\omega - \omega_0/2)} \cdot e^{j(\omega-\omega_0)(Mm-1)/2} + \frac{\sin((\omega + \omega_0)Mm/2)}{\sin(\omega + \omega_0/2)} \cdot e^{j(\omega+\omega_0)(Mm-1)/2} \right] \cdot A(\omega Mm) +$$

$$+ \frac{1}{\sqrt{2}} \left[ \frac{\sin((\omega - \omega_0)Mm/2)}{\sin(\omega - \omega_0/2)} \cdot e^{j(\omega-\omega_0)(Mm-1)/2} - \frac{\sin((\omega + \omega_0)Mm/2)}{\sin(\omega + \omega_0/2)} \cdot e^{j(\omega+\omega_0)(Mm-1)/2} \right] \cdot B(\omega Mm) = S_I(\omega) \cdot A(\omega Mm) + S_Q(\omega) \cdot B(\omega Mm)$$

$$(7)$$

Said signal is transmitted through the H($\omega$) medium and will reach the receiver with additive noise N($\omega$):

$$R(\omega) = S_I(\omega) \cdot H(\omega) \cdot A(\omega Mm) + S_Q(\omega) \cdot H(\omega) \cdot B(\omega Mm) + N(\omega) \qquad (8)$$

Once the input signal has been sampled, the receiver must extract an estimator of the phases I and Q, by correlating the transmitted symbols. This first correlation can be simplified using an approximation of said symbols by applying the following transformation:

$$s_I[n] = sign[\cos(\omega_0 n)], \quad 0 \le n < Mm - 1,$$
$$s_Q[n] = s_I\left[n - \frac{M}{4}\right] \qquad (9)$$

Or also:

$$s_I[n] = \begin{cases} \left[\cos(\omega_0 n) \ge \cos\left(\frac{\pi}{4}\right)\right], & \omega_0 n < \pi \\[2mm] \left[\cos(\omega_0 n) \le -\cos\left(\frac{\pi}{4}\right)\right], & \omega_0 n \ge \pi \end{cases} \qquad (10)$$

$$s_Q[n] = s_I\left[n - \frac{M}{4}\right]$$

where $M$ is the number of samples per carrier cycle and m is the number of cycles per symbol. In this case, the symbols have values in the range 1, 0 and -1. For example, if $M$=8, the corresponding symbols will be:

$$s_I[n] = 1100 - 1 - 100 \text{ and } s_Q[n] = 001100 - 1 - 1.$$

The final result is not optimal, but the resource saving it entails has more advantages than disadvantages because the correlation is reduced to addition and subtraction operations. The first correlation corresponds to the extraction of the two estimators of the corresponding phases:

$$I'[n] = r[n] \oplus s_I[n] = \sum_{k=0}^{M \cdot m - 1} r[k] s_I[n+k]$$

$$Q'[n] = r[n] \oplus s_Q[n] = \sum_{k=0}^{M \cdot m - 1} r[k] s_Q[n+k] \qquad (11)$$

$$I'(\omega) = r(\omega) \cdot S_I(-\omega), \quad Q'(\omega) = r(\omega) \cdot S_Q(-\omega)$$

the maximum values of which, as will be seen below, correspond to the central instants of the bits received from each of the sequences.

The following process consists of correlating with the transmitted complementary sequences. Nevertheless, given that the bits of said sequences are separated by *Mm* samples, the correlation will have to be carried out by the sequences interpolated by *Mm.*

Two new correlation functions are thus obtained:

$$I''[n] = I'[n] \oplus A\left[\frac{n}{Mm}\right] = \sum_{k=0}^{M \cdot m - 1} I'[k] A\left[\frac{n}{Mm}+k\right]$$

$$Q''[n] = Q'[n] \oplus B\left[\frac{n}{Mm}\right] = \sum_{k=0}^{M \cdot m - 1} Q'[k] B\left[\frac{n}{Mm}+k\right] \qquad (12)$$

By applying Fourier transforms to (12):

$$I''(\omega) = R(\omega) \cdot S_I(-\omega) \cdot A(-\omega Mm)$$

$$Q''(\omega) = R(\omega) \cdot S_Q(-\omega) \cdot B(-\omega Mm) \qquad (13)$$

And substituting the values of (8), it is obtained that:

$$I''(\omega) = S_I(\omega) \cdot S_I(-\omega) \cdot H(\omega) \cdot A(\omega Mm) \cdot A(-\omega Mm) +$$

$$+ S_Q(\omega) \cdot S_I(-\omega) \cdot H(\omega) \cdot B(\omega Mm) \cdot A(-\omega Mm) + \qquad (14)$$

$$+ N(\omega) \cdot S_I(-\omega) \cdot A(-\omega Mm)$$

and

$$Q''(\omega) = S_I(\omega) \cdot S_Q(-\omega) \cdot H(\omega) \cdot A(\omega Mm) \cdot B(-\omega Mm) +$$

$$+ S_Q(\omega) \cdot S_Q(-\omega) \cdot H(\omega) \cdot B(\omega Mm) \cdot B(-\omega Mm) + \qquad (15)$$

$$+ N(\omega) \cdot S_Q(-\omega) \cdot B(-\omega Mm)$$

The symbols used, $s_I$ and $s_Q$, their autocorrelations, $\phi_{II}(k)$ and $\phi_{QQ}(k)$, and their crossed autocorrelations, $\phi_{IQ}(k)$ and $\phi_{QI}(k)$, comply with two properties that are applied in this patent in order to obtain the synchronism interval $\tau$:

$$1. \quad \max\{\phi_{II}(\tau)\} = \max\{\phi_{QQ}(\tau)\} = K.$$

$$2. \quad \phi_{QI}(\tau) = \phi_{IQ}(\tau) = 0$$

where $\kappa$ is a constant dependent on the chosen symbols. The sum of both expressions gives a function the maximum peak of which represents the synchronised arrival of the signal. The instant in which the signal is maximum is the one that determines that it is correctly synchronised.

Thus, by adding both expressions (11) and (12) in time, if one limits oneself to the instant of arrival, $\tau$, of the signal (when the difference of times n - $\tau$ = 0), the instants in which the correlations between the orthogonal systems are maximum and it is obtained that:

$$A_r[\tau] = I[\tau] + Q[\tau] = (\phi_{II}[\tau]\phi_{AA}[\tau] + \phi_{QI}[\tau]\phi_{BA}[\tau] + \phi_{IQ}[\tau]\phi_{AB}[\tau] + \phi_{QQ}[\tau]\phi_{BH}[\tau])h[\tau] + n[\tau]\phi_{IQ}[\tau]\phi_{AB}[\tau]$$

$$(16)$$

And by substituting:

$$A_r[\tau] = I[\tau] + Q[\tau] = (K\phi_{AA}[\tau] + K\phi_{BH}[\tau])h[\tau] + n[\tau]\phi_{IQ}[\tau]\phi_{AB}[\tau] = 2KLh[\tau] + n[\tau]\phi_{IQ}[\tau]\phi_{AB}[\tau]$$

$$(17)$$

A threshold-overcoming detection circuit must be added in order to find that maximum peak.

This circuit can be a fixed or adaptative threshold circuit.

The latter case is the most efficient because it can be calculated according to the energy of the signal itself which, coincidentally, is represented by the sum of $I''$ and $Q''$, because it corresponds to an estimator of the autocorrelation of the received signal and therefore, of its power.

The main advantage of this method is found by analysing the second term of expression (14).

The mean power sent corresponds to the autocorrelation of the transmitted signals, $\kappa$, i.e., the process carried out on the signal allows obtaining a process gain in value reception of 2L, with respect to a system that does not use this pulse compression, which improves the signal-to-noise ratio in reception.

This can mean that a 3 dB noise reduction is obtained if the length of the sequences is doubled. Inversely, doubling the signal-to-noise ratio requires doubling the length of the used sequences.

The advantage of this method is that an improvement of the signal-to-noise ratio as large as desired can be obtained only by increasing the length of the chosen complementary sequences, therefore, large transmission powers are not necessary in order to obtain a high signal-to-noise ratio in reception.

In the general case of M sets of complementary sequences, this improvement will correspond to a process gain (in decibels) defined as:

$$PG = 10\log_{10}(2ML)\,dB \qquad (18)$$

where N corresponds to the length of the complementary sequences used in the modulation and M to the number of families forming each of the orthogonal sets.

This feature is very important in applications where a low transmission power is desirable (portable terminals, spacecraft and communication satellite), where the communication is carried out over long distances (deep space transmissions) and even in military applications in which the interference caused by the enemy or the need to encrypt the transmission determine the security and quality of the communication.

Therefore, the described invention constitutes a powerful improvement system in obtaining the synchronisation of current and future communication systems, especially those using modulation by means of OTDM complementary sequences or their variants, and when there are restrictions in the transmission power.

## Brief Description of the Drawings

Figure 1 shows a process in which the synchronism impulse (occupying the same bandwidth as the symbols corresponding to the data), T($\omega$) is convoluted with the M sequences Ai and the M sequences Bi of the chosen set (1) of M pairs of orthogonal sequences.

The outputs are convoluted and added in (2) in order to obtain a quadrature modulation and to be sent to any transmission medium, H(ω). In the receiver (3), the signals with additive noise N(ω) are correlated with the symbols used in the modulation (2) in order to obtain an estimator of both quadrature phases extracted with noise. Said signals are decoded (4) by means of the correlation with the same M pairs of orthogonal complementary sequences used in the transmission (1), such that a signal T'(ω) having a maximum value in the synchronism instant is recovered at the output of the process, its application to a threshold detector will provide the arrival or synchronism instant.

Figure 2 shows the basic scheme of the coding method within block (1). It consists of M identical blocks 1.1 to 1.M carrying out the convolution described in the previous section with the input synchronism signal T(ω).

All of them obtain two phases, $I_i/Q_i$. They are added one by one in order to obtain the signals I and Q in base band at their output, which signals will subsequently be sent to the modulation step.

Figure 3 shows a detail of one of the convolvers of block (1) by one of the M pairs of complementary sequences used, obtaining two phases which are subsequently modulated in (2).

Figure 4 shows the modulator of the signals generated by the previous block (1), consisting of two convolvers by two quadrature symbols (sine and cosine) respectively, at the transmission frequency. Both outputs are added, thus generating a QAM modulation.

Figure 5 shows a basic scheme of the internal decoding method of block (3). There are two blocks in it which carry out the correlation of the input signal with the quadrature symbols used in the transmission (or an approximation thereof), obtaining an estimation of the transmitted quadrature phases (I'/Q') at the output.

Figure 6 shows a scheme of the embodiment of the decoding block (4). In it the correlation process of the input signals with the corresponding transmitted sequences A and B interpolated m-1 samples is observed, where m is the number of samples per symbol.

Figure 7 shows a scheme of the embodiment of one of the coders of block (4), 4.i, in which the simultaneous correlation process of the estimated input phases with the corresponding sequences A and B is observed in order to obtain the output signals $T'_i(\omega)$, where i is the number of the corresponding block.

All the blocks are identical, however, as explained throughout the text, the sets of sequences used by all of them comply with the property of orthogonality or quasiorthogonality therebetween. The sum of all of them will provide the estimator of the instant of arrival of the synchronism impulse.

**Preferred Embodiment of the Invention**

A possible embodiment of this method applied to a point-by-point radio communication system in free space is detailed below. For the sake of clarity, figure 1 shows schematically the implementation for the case of a quadrature transmitter that carries out the modulation of the data using two phases I/Q.

According to that explained previously, a set of M pairs of Golay complementary sequences (Ai/Bi) of length L bits, previously generated and stored in the transmitter by means of 2M binary logs (values 1 and -1) is started with, and these are intended to be simultaneously convoluted (figure 2) with the samples of the input synchronism signal T(ω).

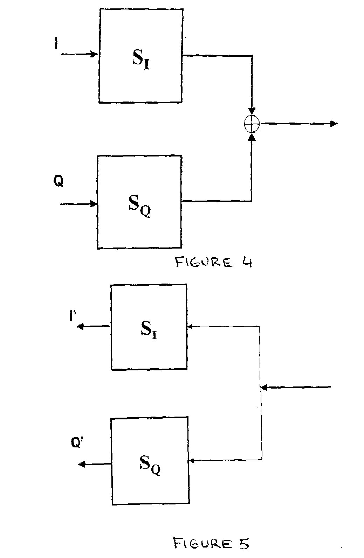

Figure 3 further shows in detail one of the M basic coding blocks (BCB) constituting the coder of figure 2.

The coder carries out the following tasks, where R is the transmission speed of the original system in symbol/s:

The digital data of the phases I/Q, oversampled at least at the Nyquist frequency (2R), are converted and convoluted simultaneously with each sequence A and B of each one of the M pairs, and the result is sent to the two outputs corresponding to the sampling frequency.

Each convolver carries out the convolution operation at the sampling frequency but the samples of the complementary sequences with which it convolutes are interpolated with m-1 zeros, where *m* is the number of samples per symbol, and will depend on the sampling frequency $f_s$ such that $m=f_s/R$. The two outputs generated by each BCB are added one by one with the corresponding outputs of the remaining identical blocks, thus obtaining two signals in base band I/Q.

Subsequently, both phases I/Q are convoluted by means of the scheme of figure 4 by means of two quadrature symbols $S_I/S_Q$. This figure shows a detailed scheme of the decoder which is also formed by M basic decoding blocks (BDB), detailed in figure 5. Said identical blocks carry out the following tasks:

The signal received with noise and distorted by the response to the impulse of the medium is correlated with the quadrature symbols used in the transmission (or an approximation of them) thus obtaining an estimation of both transmitted phases (figure 5), I'/Q'.

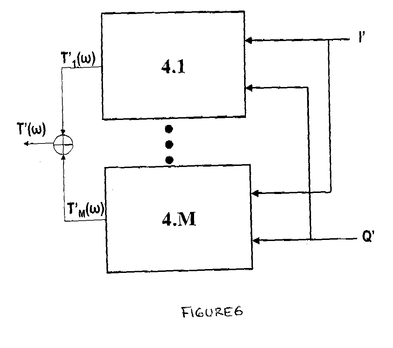

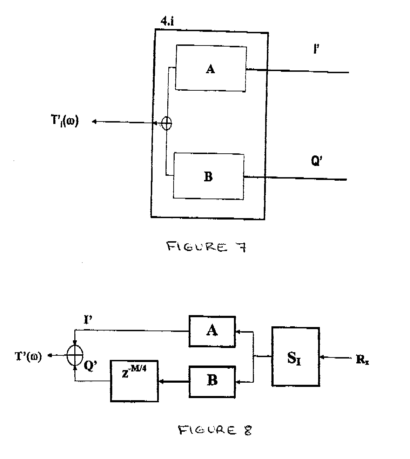

The two phases obtained are correlated in block (4) with the same sequences used in the coding according to figure 6, with the same level of interpolation of zeros as in the transmitter (m-1), such that the outputs of the correlators are added sample by sample, figure 7. In this way, an estimator of the synchronism instant T' ( ) is obtained with an improvement of the noise-to-signal ratio depending on the length of the used sequences and the set of M pairs of complementary sequences.

Both apparatuses form the synchronisation system.

**Claims**

1.  A device and method for the synchronisation of a data communication system using complementary sequences, essentially **characterized in that** said device allows encoding, transmitting and decoding the timestamp information through a communication channel, and furthermore, **in that** the coding of the modulated signals in base band and their spectrum by using a set of complementary sequences allows modifying positively, once decoded, the signal-to-noise ratio in reception and the detection of said timestamp.

2.  A device and method for the synchronisation of a data communication system using complementary sequences according to claim 1, **characterized in that** the device allows encoding the timestamp information through a communication channel comprising the generation of sets of orthogonal complementary sequences or sequences of low crossed correlation, encoding the synchronism impulse in base band and wherein the coding comprises at least:

    • a generator of binary sequences used in the coding of the synchronism impulse using M sets of pairs of orthogonal complementary sequences (Ai, Bi), or sequences of low crossed correlation, in order to encode at least two phases (I, Q) in base band of any conventional quadrature modulation system.
    • a coder convoluting M sets of pairs of orthogonal complementary sequences (Ai, Bi) with the quadrature phases (I, Q) respectively in order to obtain 2M codified output phases, M correspond to Ai, M to Bi,

        - wherein each set of generated M phases, by means of the M groups of complementary sequences, are added one by one to thus obtain two phases forming the coded synchronism signal in base band,
        - and wherein the two phases obtained from the coding process are modulated in QAM (Quadrature Amplitude Modulation) and sent to a transmitter in order to be sent to the transmission medium.
        - and wherein the synchronism impulses are encoded in base band with the purpose of generating a synchronism impulse and being sent through any transmission medium.

3.  A device and method for the synchronisation of a data communication system using complementary sequences according to claims 1 and 2, **characterized in that** the device for receiving the synchronism signal through a communication channel is essentially carried out on the basis of:

    • a first correlator extracting an estimator of the corresponding quadrature phases (I'Q') and comprising filters adapted to the used symbols.
    • a second correlator extracting the estimation of the corresponding 2M phases and comprising filters adapted to the sets of complementary sequences used in the transmission, correlators or convolvers, their sum and the means for conditioning the output of said adapted filters towards the wide band detector.

4.  A device and method for the synchronisation of a data communication system using complementary sequences according to claims 1 and 2, **characterized in that** the device for decoding the received information in base band according to claim 2, with the purpose of extracting a timestamp T'(w), encoded according to claim 1, is received from any transmission medium.

5.  A device and method for the synchronisation of a data communication system using complementary sequences according to the previous claims, **characterized in that** the method for encoding the synchronism impulses in base band comprises at least:

    • The storage of the M sets of complementary sequences of length N, in binary logs of N bits, the values of which are comprised between 1 and -1.
    • The convolution of the synchronism impulse with the M sets of complementary sequences (Ai, Bi) interpolated with m-1 zeros between bits, where m=fs*T, fs is the sampling frequency of the input signals and T is the time of duration of the synchronism impulse and wherein it must be complied that:

        - The sum of each of the M convoluting blocks corresponding to the sequence Ai, in order to obtain the signal in phase I.
        - - The sum of each of the M convoluting blocks corresponding to the sequence Bi, in order to obtain the signal in phase Q.

- The modulation of both quadrature phases and the sending of the obtained phases to a transmission medium.

6. A device and method for the synchronisation of a data communication system using complementary sequences according to claim 2, **characterized in that** an approximation of the symbols used in the transmission $S_I$, $S_Q$ is used in order to estimate the quadrature phases (I', Q') such that said approximation corresponds to the following equations:

$$s_I[n] = sign[\cos(\omega_0 n)], \quad 0 \le n < Mm - 1,$$

$$s_Q[n] = s_I\left[n - \frac{M}{4}\right]$$

where M is the number of samples per carrier cycle and m is the number of cycles per symbol.

$$s_I[n] = 0..0..1..1..0..0..-1..-1$$

$$s_Q[n] = -1..0..0..1..1..0..0..-1$$

where 0..0 corresponds to M/4 zeros; 1..1 corresponds to M/4 ones and -1..-1 to M/4 -1's, where M is the number of samples per carrier cycle.

7. A device and method for the synchronisation of a data communication system using complementary sequences according to claims 2 and 6, **characterized in that** the decoding method is carried out on the basis of a first correlation extracting the estimation of the phases I/Q and carries out the second correlation with the M sets of corresponding complementary sequences by phases, adding them and obtaining an optimal estimator of the synchronism instant $T'(\omega)$.

8. A device and method for the synchronisation of a data communication system using complementary sequences according to claims 3 and 6, **characterized in that** the decoding method comprises at least:

• The means for carrying out a first quadrature correlation operation of the input signal with the symbols used in the transmission, or an approximation of them, and their introduction in each of the M basic decoding blocks (BDB).
• The filtration by means of correlation, convolution or filter adapted to the M sets of complementary sequences, corresponding to the different recovered phases.
• The sum of the results of the previous section in order to obtain the original timestamp $T'(\omega)$.
• The extraction by means of thresholding the synchronism instant coinciding with the maximum value of the timestamp.

9. A device and method for the synchronisation of a data communication system using complementary sequences according to claims 2, 3 and 6, **characterized in that** the optimization of the process applies a single correlation by the in-phase symbol $S_I$ in order to obtain the estimation of phase I, the result of which is correlated, by means of a second correlator block, by both complementary sequences simultaneously, the output of the correlation corresponding to the pair transmitted by means of the symbol $S_Q$, delayed M/4 samples, corresponds to the estimation of the autocorrelation by pair B and wherein the estimator $T'(\omega)$ serving as timestamp is obtained by adding both outputs, where M is the number of samples per carrier cycle.

FIGURE 1

FIGURE 2

FIGURE 3

FIGURE 4

FIGURE 5

FIGURE 6

FIGURE 7

FIGURE 8

## INTERNATIONAL SEARCH REPORT

International application No.

PCT/ ES 2004/000553

| A. | CLASSIFICATION OF SUBJECT MATTER |
|---|---|

**IPC.7** H 04 L 7 / 02 , H 04 J 11 / 00 .

According to International Patent Classification (IPC) or to both national classification and IPC

| B. | FIELDS SEARCHED |
|---|---|

Minimum documentation searched (classification system followed by classification symbols)

**IPC.7** H 04 L 7 / 02 , H 04 J 3 / 06 , H 04 J 11 / 00 .

Documentation searched other than minimum documentation to the extent that such documents are included in the fields searched

Electronic data base consulted during the international search (name of data base and, where practicable, search terms used)

CIBEPAT,EPODOC,WPI,PAJ,XPESP,INSPEC.

| C. | DOCUMENTS CONSIDERED TO BE RELEVANT | |
|---|---|---|
| Category* | Citation of document, with indication, where appropriate, of the relevant passages | Relevant to claim No. |
| X<br>A | US 6567482 B1 (POPOVIC´) 20.05.2003 , the whole document | 1.<br>2-9. |
| A | US 2002165003 A1 (RUDOLF ET AL.) 07.11.2002 , the whole document | 1-9. |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| **08 April 2005 (08.04.05)** | **17 April 2005 (17.04.05)** |

| Name and mailing address of the ISA/ | Authorized officer |
|---|---|
| **SPTO** | |
| Facsimile No. | Telephone No. |

Form PCT/ISA/210 (second sheet) (July 1992)

INTERNATIONAL SEARCH REPORT
Information on patent family members

International Application No

PCT/ ES 2004/000553

| Patent document cited in search report | Publication date | Patent familiy member(s) | Publication date |
|---|---|---|---|
| US 6567482 B1 | 20.05.2003 | WO 0054424 A2 | 14.09.2000 |
| | | CA 2364349 A1 | 14.09.2000 |
| | | AU 3688400 A | 28.09.2000 |
| | | TW 463477 B | 11.11.2001 |
| | | EP 1159796 A2 | 05.12.2001 |
| | | EP 20000915659 | 03.03.2000 |
| | | CN 1367965 A | 04.09.2002 |
| | | JP 2002539667 T | 19.11.2002 |
| | | AU 770399 B2 | 19.02.2004 |
| | | | 19.02.2004 |
| US 2002165003 A1 | 07.11.2002 | US 2002039906 A1 | 04.04.2002 |
| | | FR 2814885 A1 | 05.04.2002 |
| | | EP 1195924 A1 | 10.04.2002 |
| | | EP 20010402553 | 03.10.2001 |
| | | CN 1347255 A | 01.05.2002 |
| | | JP 2002176376 A | 21.06.2002 |
| | | EP 1263152 A1 | 04.12.2002 |
| | | EP 20020077753 | 03.10.2001 |
| | | AT 242941 T | 15.06.2003 |
| | | AT 242567 T | 15.06.2003 |
| | | DE 60100331 D | 10.07.2003 |
| | | DE 60100361 D | 17.07.2003 |
| | | EP 1333601 A1 | 06.08.2003 |
| | | EP 20030076165 | 03.10.2001 |
| | | DE 60100361 T | 04.12.2003 |
| | | DE 60100331 T | 04.12.2003 |
| | | ES 2198388 T | 01.02.2004 |
| | | ES 2201046 T | 16.03.2004 |

Form PCT/ISA/210 (patent family annex) (July 1992)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3047660 A, John P. Costas
- US 4290139 A

- ES P200002086

**Non-patent literature cited in the description**

- **TSENG, C.-C. ; LIU C.L.** Complementary Sets of Sequences. *IEEE Trans. Inform. Theory,* September 1972, vol. IT-18 (5), 644-652

- **M. J. E. GOLAY.** Complementary sequences. *IRE Transactions on Information Theory,* April 1961, vol. IT-7, 82-87